# EUROPÄISCHE PATENTANMELDUNG

(11) **EP 3 572 993 A1**
(43) Veröffentlichungstag der Anmeldung: **27.11.2019**
(21) Anmeldenummer: 19166627.0
(22) Anmeldetag: 01.04.2019
(51) Int. Cl.: G06Q 10/06

(54) **VERFAHREN ZUR AUTOMATISCHEN PRÜFUNG VON KÜCHENPLANUNGSDATEN**

(30) Priorität: 23.05.2018 DE 102018112311
(71) Anmelder: Nobilia-Werke J. Stickling GmbH & Co. KG, 33415 Verl (DE)
(72) Erfinder: STÜRMEYER, Gerhard, 28816 Stuhr (DE); SCHWOLOW, Kai-Ole, 28325 Bremen (DE)
(74) Vertreter: Kleine, Hubertus

(57) **Zusammenfassung**

Die Erfindung betrifft ein Verfahren zur automatischen Prüfung von Küchenplanungsdaten (14) auf mögliche Konflikte, wobei die Küchenplanungsdaten (14) Komponenten einer Küche betreffen. Das Verfahren zeichnet sich dadurch aus, dass
- mindestens eine Prüfregel auf mindestens eine der Komponenten angewendet wird; und
- eine Warn- oder Fehlermeldung ausgegeben wird, wenn die Komponente die Prüfregel nicht erfüllt;
wobei zur Überprüfung mithilfe der Prüfregel Informationen zu der Komponente semantisch ausgewertet werden.

## Beschreibung

Die Erfindung betrifft ein Verfahren zur automatischen Prüfung von Küchenplanungsdaten auf mögliche Konflikte, wobei die Küchenplanungsdaten Komponenten einer Küche betreffen.

Gerade bei Küchen werden viele verschiedene Komponenten - Möbel, Haushaltsgeräte, Zubehörteile, Armaturen usw. - ggf. unterschiedlicher Hersteller auf engstem Raum miteinander verbaut, um ein gefälliges Aussehen mit hoher Funktionalität zu kombinieren.

Zur effizienten und möglichst wenig fehleranfälligen Planung sind computerunterstützte Küchenplanungssysteme bekannt, die es ermöglichen, in einen Grundriss eines Raums eine Küche aus verschiedensten Komponenten zusammenzustellen. Dabei können die Komponenten Küchenmöbel, Küchengeräte und/oder Armaturen oder sonstige Gas-, Wasser- oder elektrische Installationselemente sein.

Moderne Planungssysteme erlauben dabei, unmittelbar auf hinterlegte Daten, z.B. geometrische Abmessungen, zu den Komponenten zurückzugreifen, insoweit diese von den Herstellern in verwertbarer Art und Weise bereitgestellt werden. Um Daten auch verschiedener Hersteller in einem einheitlichen Format zu diesem Zweck verwenden zu können, ist beispielsweise das sogenannte "Integrierte Datenmodell für planungsintensive Möbel" (IDM) entwickelt worden und in Verwendung, das eine Datenstruktur für die Beschreibung von Küchenmöbeln und weiteren in der Küche verwendeten Komponenten ermöglicht.

Gemäß der IDM Version 1.7.3 werden die Beschreibungsdaten in Form einer Textdatei bereitgestellt, wobei Datensätze in einer vorgegebenen Struktur angegeben sind. Die Daten sind in verschiedene Satzarten, die durch einen dreistelligen Zahlencode unterschieden sind, unterteilt, z.B. für Herstellerinformationen, für Serien- und Programminformationen, für Artikelinformationen, für Artikelpreise, für kaufmännische und grafische Informationen und auch für eine graphische Repräsentation der Komponente. Innerhalb jeder Satzart ist eine Mehrzahl von Schlüsselfeldern definiert, wobei die Kombination von Satzart und Schlüsselfeld einen Datensatz eindeutig referenziert. In geplanten neueren Versionen des IDM, z. B. in der IDM Version 2.0, wird eine Repräsentation dieser Daten in einer XML-basierten Struktur erfolgen. Inhaltlich ist die übergebene Information jedoch vergleichbar.

Die mit einer Komponente vom Hersteller gelieferten IDM-Daten ermöglichen es einem Küchenplanungssystem beispielsweise, einen geometrischen Konflikten zu erkennen und auf diesen hinzuweisen. Beispielsweise erkennt das Küchenplanungssystem, dass in einer Nische einer Breite von 170 Zentimetern (cm) nicht drei Küchenunterschränke als Komponenten mit jeweils einer Breite von 58 cm nebeneinander angeordnet werden können, da die sich ergebene Gesamtbreite größer als die zur Verfügung stehende Breite wäre.

Über eine derartige im Wesentlichen geometrische Analyse der Küchenplanung gehen bekannte Küchenplanungssysteme in der Regel jedoch nicht hinaus, u.a. da die zur Verfügung stehenden IDM-Daten entweder für die Durchführung einer Konfliktprüfung nicht geeignet sind oder nicht in einem ausreichenden Detailgrad vom Hersteller vorliegen.

Es ist eine Aufgabe der vorliegenden Erfindung, ein Verfahren zur Durchführung einer Konfliktprüfung für Küchenplanungsdaten zu schaffen, das möglichst umfangreiche Prüfungen auch dann ermöglicht, wenn strukturierte Daten der verwendeten Komponenten nicht oder in nicht ausreichendem Maße vom Hersteller bereit gestellt werden.

Diese Aufgabe wird durch ein Verfahren mit den Merkmalen des unabhängigen Anspruchs gelöst. Vorteilhafte Ausgestaltungen und Weiterbildungen sind Gegenstand der abhängigen Ansprüche.

Ein erfindungsgemäßes Verfahren zur automatischen Prüfung von Küchenplanungsdaten zeichnet sich dadurch aus, dass mindestens eine Prüfregel auf mindestens eine der Komponenten angewendet wird und dass eine Warn- oder Fehlermeldung ausgegeben wird, wenn die Komponente die Prüfregel nicht erfüllt, wobei zur Überprüfung mithilfe der Prüfregel Informationen zu der Komponente semantisch ausgewertet werden.

Erfindungsgemäß beschränkt sich das Verfahren somit nicht auf strukturiert vorliegende Daten zu der Komponente, sondern berücksichtigt Informationen durch eine semantische Auswertung. Durch diese werden z.B. in Katalogtexten explizit oder implizit vorhandene Daten für die Konfliktüberprüfung nutzbar, wodurch eine umfassendere Prüfung ermöglicht wird.

In einer vorteilhaften Ausgestaltung des Verfahrens umfasst die semantische Auswertung einen Textvergleich, bevorzugt mithilfe eines Trunkationsoperators und/oder eines regulären Ausdrucks. Auf diese Weise können Daten aus den vorhandenen Informationen extrahiert werden, wobei eine möglichst große Unabhängigkeit von der genauen grammatikalischen Form der Informationen erzielt wird.

Die Informationen, z.B. Katalogtexte, sind vorteilhaft in einer Datenbank gespeichert, was eine gute Strukturierung der Informationen sicherstellt und eine gute Zugänglichkeit ermöglicht. Zudem können Datenbankabfragen zur Umsetzung der semantischen Auswertung eingesetzt werden. Datenbankabfragen in Abfragesprachen wie SQL (Structured Query Language) stellen zu diesem Zweck mächtige Werkzeuge bereit, die auf diese Weise nutzbar sind.

In einer weiteren vorteilhaften Ausgestaltung des Verfahrens wird zunächst zu der zu überprüfenden Komponente eine Kategorie ermittelt, der die Komponente zugeordnet ist, wobei die mindestens eine Prüfregel aus einer Datenbank anhand der ermittelten Kategorie abgerufen wird. Auch zur Ermittlung der Kategorie kann dabei vorgesehen sein, Informationen zu der Komponente semantisch auszuwerten. Auf diese Weise wird erreicht, dass nur solche Prüfungsregeln auf eine Komponente angewendet werden, die für diese Komponente relevant sind. Es kann so Rechenzeit bei der Überprüfung eingespart werden.

Das beschriebene Verfahren wird vorteilhaft in einer Prüfungseinrichtung durchgeführt, die über ein Netzwerk mit einem Planungsprogramm verbunden ist, das die Küchenplanungsdaten an die Prüfungseinrichtung sendet. Durch die Trennung von Planungsprogramm und Prüfungseinrichtung kann die Prüfungseinrichtung von verschiedenen Planungsprogrammen eingesetzt werden und unabhängig vom Typ oder Hersteller des Planungsprogramms gepflegt werden. Durch eine Integration des Übermittelns der Küchenplanungsdaten an die Prüfungseinrichtung in das Planungsprogramm kann die Überprüfung dennoch einfach und für den Nutzer bequem in der Planungsphase erfolgen.

Nachfolgend wird anhand eines Ausführungsbeispiels mit Hilfe von Figuren die Erfindung näher erläutert. Es zeigen:
- Fig. 1: eine schematische Darstellung eines Systems, in dem das erfindungsgemäße Verfahren zur automatischen Prüfung von Küchenplanungsdaten ausgeführt werden kann; und
- Fig. 2: ein Flussdiagramm zur Illustration eines Ausführungsbeispiels eines erfindungsgemäßen Verfahrens.

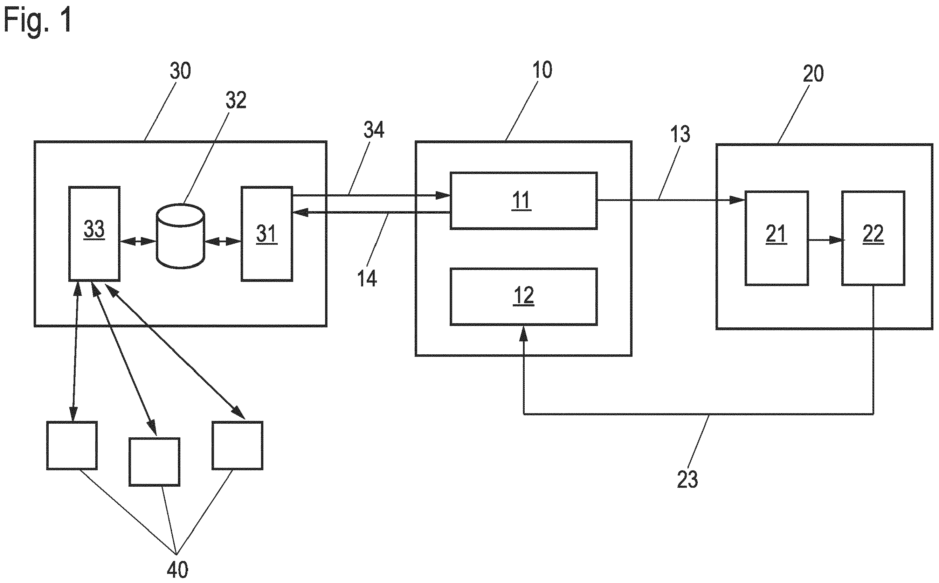

In Fig. 1 ist in einem schematischen Blockdiagramm ein System wiedergegeben, in dem ein erfindungsgemäßes Verfahren zur automatischen Prüfung von Küchenplanungsdaten durchführbar ist.

Das System umfasst einen Planungsrechner 10, auf dem ein Planungsprogramm 11, insbesondere ein Küchenplanungsprogramm ausgeführt wird. Derartige Programme sind im Markt bekannt. Sie ermöglichen es, in einen Grundriss eines Raums Komponenten einer Küche anzuordnen und so eine zu bauende Küche individuell zu planen. Die Küchenplanung kann dann in Form von zwei- oder dreidimensionalen Ansichten ausgegeben werden. Zudem werden Listen aller bei der Küchenplanung eingesetzten Komponenten erstellt.

Das Planungsprogramm 11 kann dabei auf Katalogdaten einer Vielzahl von Komponenten zurückgreifen, in der Möbelelemente (Schränke, Ablagen usw.) ebenso wie Einbaugeräte (Herd, Kochmulde, Kühlschrank usw.) und Installationselemente (Spülen, Armaturen, Lampen usw.) hinterlegt sind. Dabei sind nicht nur generische Elemente (z. B. Unterschrank der Höhe ..., Breite ... und Tiefe ...) in den Katalogdaten gespeichert, sondern insbesondere auch Abmessungen und sonstige Daten konkreter Produkte.

In der Regel wird ein solcher Planungsrechner 10 bei einem Händler eingesetzt, der für einen Kunden eine Küche plant. Nach Abschluss der Planung erfolgt eine Bestellung aller für den Aufbau der Küche benötigten Komponenten.

Das Planungsprogramm 11 kann zu diesem Zweck die Daten einer geplanten Küche unmittelbar oder über ein Bestellprogramm 12 in Form von Bestelldaten 13 an einen Küchenhersteller 20 weiterleiten.

Beim Küchenhersteller 20 werden die Bestelldaten 13 von einer Bestellungsannahme 21 aufgenommen und an ein Produktionssystem 22 weitergeleitet. Innerhalb des Produktionssystems 22 werden die Bestelldaten 13 in Produktionsabläufe für bestimmte vor Ort beim Küchenhersteller 20 produzierte Komponenten, in der Regel Möbel, umgesetzt. Weiter werden Komponenten der geplanten Küche, die zugekauft werden, in entsprechende Abrufvorgänge aus einem Lager oder auch Bestellvorgänge für die von einem weiteren Anbieter hergestellten oder vertriebenen Komponenten umgesetzt.

Ist dieses erfolgt, wird in der Regel eine Auftragsbestätigung 23 zurück an den Planungsrechner 10 gesendet, die dann beispielsweise von dem Bestellprogramm 12 verwaltet und ausgegeben wird. Bevorzugt erfolgt die Übermittlung der Bestelldaten 13 und die Rückübermittlung der Auftragsbestätigung 23 in elektronischer Form über Datenwege, üblicherweise das Internet. Alternativ können die Bestelldaten 13 oder auch die Auftragsbestätigung auch über andere Wege, beispielsweise per Fax, E-Mail oder Post ausgetauscht werden.

Das Planungsprogramm 11 unterstützt den Anwender nicht nur dadurch, dass Ansichten der geplanten Küche und Listen über die verwendeten Komponenten erstellt werden, sondern führt in der Regel auch eine rudimentäre Prüfung auf mögliche Konflikte durch.

Diese Konfliktprüfung umfassten beispielsweise eine Überprüfung, ob eine bestimmte ausgewählte Komponente überhaupt in den zur Verfügung stehenden Platz hinein passt. Dabei bedient sich das Planungsprogramm 11 an Daten, die von einem Hersteller einer Komponente mitgeliefert oder zur Verfügung gestellt werden. Als Datenformat hat sich dabei das "Integrierte Datenmodell für planungsintensive Möbel" etabliert, das beispielsweise in der Version IDM 1.7.3 standardisiert ist. Konform zu diesem Datenmodell gelieferten Daten werden nachfolgend auch als IDM-Daten bezeichnet. Insbesondere Konflikte geometrischer Natur können auf diese Art und Weise vom Planungsprogramm 11 bereits erkannt und als Fehler- und/oder Warnmeldung an den Benutzer ausgegeben werden.

Neben der bereits bekannten Prüfung auf insbesondere geometrische Konflikte ist anmeldungsgemäß eine umfassendere Prüfung vorgesehen, die bei dem in Fig. 1 dargestellten Ausführungsbeispiel in Zusammenmit mit einem Expertensystem 30 durchgeführt wird.

Das Expertensystem 30 ist vom Planungsrechner 10 bevorzugt über eine Netzwerkverbindung, beispielweise das Internet, erreichbar. Das Expertensystem 30 kann beispielsweise vom Küchenhersteller 20 oder auch einem externen Dienstleister betrieben werden.

Um das Expertensystem 30 in den Planungsprozess einbinden zu können, ist beim Planungsprogramm 11 beispielsweise eine Erweiterung ("Plug-In") vorgesehen, die Planungsdaten 14 des Planungsprogramms 11 an das Expertensystem 30 überträgt. In alternativen Ausgestaltungen kann die Schnittstelle im Expertensystem 30 auch fest und bereits herstellerseitig in das Planungsprogramm 11 integriert sein.

In weiteren Ausgestaltungen ist es auch denkbar, dass Planungsdaten 14 nicht vom Planungsprogramm 11 automatisch oder auf Anforderung des Benutzers an das Expertensystem 30 übertragen werden, sondern vom Planungsprogramm 11 abgespeichert werden und dann durch ein separates Programm an das Expertensystem 30 übertragen werden.

Ein Vorteil der Integration der Übertragung der Planungsdaten 14 in das Planungsprogramm 11 liegt darin, dass mühelos bereits während des Planungsprozesses eine Konfliktüberprüfung durch das Expertensystem 30 vorgenommen werden kann. Werden die Planungsdaten erst nach Abschluss der Planung übermittelt, kann es für den Benutzer aufwändiger sein, einen erkannten Konflikt zu beheben.

Das Expertensystem 30 weist eine Prüfungseinrichtung 31 auf, beispielsweise ein entsprechendes Programm, das auf einer Recheneinheit des Expertensystems 30 ausgeführt wird. Weiter umfasst das Expertensystem 30 eine Datenbank 32, in der u.a. ein Regelwerk abgelegt ist, das den Kern der Konfliktprüfung bildet.

Weiter ist ein Datensammler 33 vorhanden, der ebenfalls beispielsweise als Programm auf einer Recheneinheit des Expertensystem 30 ausgeführt wird. Der Datensammler 33 ist ebenfalls mit der Datenbank 32 verbunden.

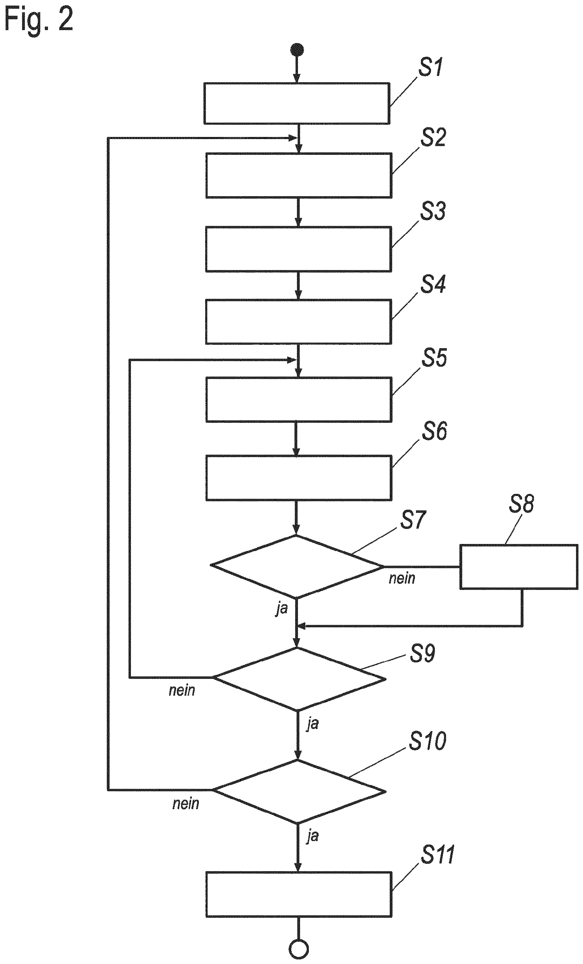

Details zur Prüfungseinrichtung 31, der Datenbank 32 und der Konfliktprüfung werden weiter unten in Zusammenhang mit der Fig. 2 näher beschrieben.

Das Expertensystem 30 und insbesondere der Datensammler 33 sind zudem mit verschiedenen Datenquellen 40 verbunden. Von den Datenquellen 40 bereitgestellte Daten werden von dem Datensammler 33 analysiert und in der Datenbank 32 gespeichert, um für die Konfliktprüfung möglichst viele Informationen über Komponenten einer Küche zur Verfügung zu haben. Die Datenquellen 40 können Datenserver verschiedenster Herstellerfirmen von Komponenten zu Verwendung in Küchen sein, über die Informationen (IDM-Daten, Datenblätter, Kataloge usw.) abgerufen werden können, die Informationen zu den angebotenen Komponenten umfassen.

Anhand der Fig. 2 wird nachfolgend ein Ausführungsbeispiel eines erfindungsgemäßen Verfahrens erläutert. Beispielhaft wird das Verfahren mit Bezug auf den Systemaufbau gemäß Fig. 1 beschrieben.

In einem ersten Schritt S1 des Verfahrens werden Planungsdaten 14 vom Planungsprogramm 11 an die Prüfungseinrichtung 31 übermittelt. Dieses kann automatisiert zu bestimmten, ggf. verschiedenen Stadien einer Küchenplanung erfolgen, oder auf Anforderung eines Benutzers des Planungsprogramms 11.

Die übermittelten Planungsdaten 14 umfassen neben einem Raumplan Informationen zu üblicherweise mehreren Komponenten, die im Raum angeordnet werden sollen. Die Informationen zu jeder Komponente umfassen zumindest eine Bezeichnung der Komponente und deren Koordinaten im Raum.

In einem nächsten Schritt S2 werden die Informationen zu einer ersten (bzw. in späteren Wiederholungen dieses Schrittes einer nächsten) Komponente aus den Planungsdaten 14 extrahiert.

In einem nächsten Schritt S3 wird von der aktuellen (d. h. der im Schritt S2 extrahierten) Komponente eine Kategorie ermittelt. Unter einer Kategorie ist eine Zuordnung der Komponente zu einer bestimmten Komponentenklasse zu verstehen. In der Datenbank 32 hinterlegte Prüfregeln sind kategoriespezifisch, um konkret für einen bestimmten Komponententypen sinnvolle Prüfungen zu ermöglichen. Kategorien sind beispielsweise "Oberschrank", "Kühlgerät", "Leuchte".

Die Daten verschiedener Komponenten sind in der Datenbank 32 gespeichert. Durch die Speicherung in der Datenbank 32 kann einfach auf eine Vielzahl von Informationen zu einer bestimmten Komponente zugegriffen werden, beispielsweise indem eine datenbanktypische Abfragesprache, insbesondere SQL (Structured Query Language), verwendet wird. Weiter können Informationen leicht hinzugefügt werden und so die Datenbasis permanent erweitert werden. In der Datenbank 32 sind zu einer bestimmten Komponente beispielsweise als Grundstock die von einem Hersteller der Komponente angebotenen IDM-Daten abgelegt. Zusätzlich können Kataloge oder Datenblätter, die über externe Datenquellen 40 erreichbar sind, ausgewertet werden, um weitere Informationen zu einer Komponente zu erhalten. Beispielsweise kann der gesamte Text, der sich im Katalog zu einer bestimmten Komponente findet, ebenfalls in der Datenbank 32 abgelegt sein.

Um nun im Schritt S3 die Kategorie einer Komponente zu ermitteln, werden zunächst, wenn vorhanden, IDM-Daten herangezogen. Im IDM-System sind Informationen zu einer bestimmten Komponente in eine Vielzahl von IDM-Satzarten unterteilt, wobei aus der Unterteilung eine Kategorie abgeleitet werden kann. Beispielsweise beschreibt die Grundform 992 eine flächenbündige Spüle und die Grundform 993 eine Unterbauspüle. Weiter kann der sogenannte Typschlüssel der IDM-Daten verwendet werden, der Geräte und ihre Einbausituation in eine Vielzahl von Typen kategorisiert. In einer Ausgestaltung des Verfahrens kann vorgesehen sein, die Kategorien in Anlehnung an den Typschlüssel zu definieren.

Falls jedoch IDM-Daten nicht verfügbar sind oder unvollständig sind, wird im Schritt S3 eine semantische Analyse aller in der Datenbank 32 verfügbaren Daten zu der betreffenden Komponente verwendet, um eine Kategorie zu ermitteln. Dazu können für jede Kategorie Schlüsselwörter, ggf. mit Trunkierungen oder in der Form von regulären Ausdrücken, hinterlegt sein, auf deren Vorkommen die verfügbaren Informationen zu der Komponente geprüft werden. Findet sich beispielsweise im verfügbaren Text einer Komponente der Begriff "Farbtemperatur", so deutet das mit hoher Wahrscheinlichkeit darauf hin, dass es sich bei der Komponente um ein Gerät der Kategorie "Leuchte" oder bei dem hinterlegt ist, dass es eine Leuchte aufweist, z.B. eine Dunstabzugshaube mit integrierten Leuchtmitteln, handelt.

Nach Ermittlung einer Kategorie zu der aktuellen Komponente werden in einem nächsten Schritt S4 die für diese Kategorie in der Datenbank 32 vorgehaltenen spezifischen Prüfregeln ermittelt. Die Prüfregeln werden dazu im Folgenden nacheinander auf die betreffende Komponente angewendet.

In einem Folgeschritt S5 wird eine erste (bzw. in späteren Wiederholungen dieses Schrittes eine nächste) zu erfüllende Prüfregel aus der Datenbank abgerufen. Die abgerufene Prüfregel wird nachfolgend auch als aktuelle Prüfregel bezeichnet.

In einem nächsten Schritt S6 wird diese aktuelle Prüfregel auf die aktuelle Komponente angewendet. Wird danach in einem Schritt S7 festgestellt, dass die Prüfregel nicht erfüllt ist, verzweigt das Verfahren zu einem Schritt S8, in dem eine entsprechende Warnung oder Fehlermeldung in eine Fehlerliste zur späteren Ausgabe eingetragen wird.

Zur Erläuterung der grundsätzlichen Vorgehensweise bei der Regelüberprüfung werden nachfolgend zwei Beispiele beschrieben:
In den Schritten S6 und S7 wird beispielsweise für die Komponente bei einer entsprechenden Prüfregel getestet, ob sie geometrisch in einen noch verfügbaren freien Raum hinein passt. Wenn sie hinein passt, wird der von ihr eingenommene Raum in einer Variable (bzw. einem Variablenfeld) das die Prüfungseinrichtung 31 führt, als belegt gekennzeichnet, so dass eine Überprüfung folgender Komponenten dann mögliche Konflikte aufdeckt.

Wird, als ein weiteres Beispiel, als Komponente eine Leuchte identifiziert, kann eine Prüfregel für die Farbtemperatur der Leuchte in der Datenbank 32 gespeichert sein. Es wird dann in dem Schritt S6 die Farbtemperatur dieser Komponente ermittelt. Für solche Eigenschaften wie die der in der Küche zu verwendenden Farbtemperatur sind in der Prüfungseinrichtung 31 Variablen vorgehalten, deren Werte in den Prüfregeln verwendet werden. Beispielsweise kann eine Variable "Lichtfarbe" eingerichtet sein, die den Wert "warmweiß", den Wert "kaltweiß" und den Wert "nicht belegt" einnehmen kann.

Falls die aktuelle Komponente die erste identifizierte Leuchte ist, d.h. dass die Variable "Lichtfarbe" den Wert "nicht belegt" hat, wird die ermittelte Farbtemperatur in der entsprechenden Variable in der Prüfungseinrichtung 31 gespeichert. Falls in dieser Variablen schon eine Leuchttemperatur gespeichert war, wird hingegen verglichen, ob die ermittelte Farbtemperatur der gespeicherten entspricht (Schritt S7). Falls das nicht der Falle ist, wird eine Warnung in eine Fehlerliste zur späteren Ausgabe abgelegt (Schritt S8). Es wird dann davor gewarnt, dass innerhalb eines Raumes mindestens zwei Leuchten mit unterschiedlichen Farbtemperaturen, also eine warmweiße und eine kaltweiße Leuchte, kombiniert sind, was zumindest auf einen Konflikt hinweisen kann.

Da Informationen über die Farbtemperatur in den IDM-Daten nicht vorgesehen sind, wird an dieser Stelle wiederum eine semantische Analyse aller verfügbaren Informationen durchgeführt. Dazu kann der verfügbare Text beispielsweise auf das Vorkommnis des Wortbestandteils "warm" bzw. "kalt" untersucht werden. Weiter können Ausdrücke, in denen eine vierstellige Zahlenangabe, gefolgt von einem "K" oder der Bezeichnung "Kelvin" gesucht und analysiert werden. Wenn die aufgefundene vierstellige Zahl kleiner als beispielsweise "4000" ist, handelt es sich um eine Leuchte, die ein kaltweißes ausgibt, wird dagegen eine Wert größer "4000" gefunden, handelt es sich um eine Leuchte, die kaltweißes Licht abgibt. Auf diese Weise kann durch eine semantische Analyse der zur Verfügung stehenden Daten automatisch eine Prüfung von Parametern erfolgen, die in strukturiert hinterlegten Daten wie den IDM-Daten nicht vorhanden oder gar nicht vorgesehen sind.

In einem nächsten Schritt S8 wird überprüft, ob zu einer Komponente alle Prüfregeln abgeprüft wurden. Falls nicht, wird das Verfahren wiederum mit der nächsten Prüfregel im Schritt S5 fortgeführt.

Wenn alle Prüfregeln abgeprüft wurden, wird in einem nächsten Schritt S10 abgefragt, ob alle Komponenten der Prüfung unterzogen wurden. Falls nicht, wird das Verfahren ab dem Schritt S2 für die nächste Komponente durchgeführt.

Wird in dem Schritt S10 festgestellt, dass alle Komponenten geprüft wurden, wird das Verfahren mit einem Schritt S11 fortgeführt, in dem die Fehlerliste mit den aufgefundenen Warn- bzw. Fehlermeldungen ausgegeben wird.

Das Verfahren ist damit beendet und die Fehlerliste kann von der Prüfungseinreichung 31 an das Planungsprogramm 11 zurückübertragen und dort dargestellt werden.

Das anmeldungsgemäße Verfahren stellt sicher, dass die vom Planungsprogramm 11 erstellten Planungsdaten 14 nach einer oder mehrerer Überprüfungen durch das Exportsystem 30 fehlerfrei oder annähernd fehlerfrei sind.

Entsprechend führt der sich anschließende Bestellvorgang zur Herstellung oder Zusammenstellung einer Küche beim Küchenhersteller 20, die ohne Konflikte aufgebaut werden kann.

Eine Besonderheit des anmeldungsgemäßen Verfahrens liegt somit darin, dass zur Ermittlung der Kategorie einer Komponente und/oder zur Ermittlung von Eigenschaften einer Komponente, die in den Prüfregeln abgefragt wird, semantisehe Ausdrücke in allen verfügbaren Daten der Komponente ausgewertet werden.

Bei dem beschriebenen Beispiel werden alle Komponenten einer geplanten Küche nacheinander mit Hilfe der hinterlegten Prüfregeln überprüft, wobei mögliche Konflikte mit anderen Komponenten anhand von während der Prüfung geführten Variablen aufgedeckt werden. In einer alternativen Ausgestaltung kann vorgesehen sein, während des Überprüfens jeder Regel einer Komponente unmittelbar die Eigenschaften anderer Komponenten abzufragen, um mögliche Konflikt direkt aufzudecken. Wenn also, um beim zuvor gegebenen Beispiel zu bleiben, eine Komponente der Kategorie "Leuchte" oder eine Komponente, die eine Leuchte aufweist, im Hinblick auf ihre Leuchtfarbe geprüft wird, werden unmittelbar alle anderen Komponenten dieser Kategorie (bzw. alle Komponenten, die eine Leuchte aufweisen) auf möglicherweise nicht übereinstimmende Leuchtfarben überprüft.

In einer weiteren möglichen Alternative werden auf alle Komponenten zunächst alle Prüfregeln angewendet, d.h. eine Selektion der Prüfungsregeln anhand der Kategorien erfolgt nicht vorab. In dem Fall umfasst die Prüfungsregel jedoch bevorzugt eine gleich zu Beginn erfolgende Abfrage, ob diese Regel im Weiteren auf die betreffende Komponente anwendbar ist.

### Bezugszeichen

- 10: Planungsrechner
- 11: Planungsprogramm
- 12: Bestellprogramm
- 13: Bestelldaten
- 14: Planungsdaten

- 20: Küchenhersteller
- 21: Bestellungsannahme
- 22: Produktionssystem
- 23: Auftragsbestätigung

- 30: Expertensystem
- 31: Prüfungseinrichtung
- 32: Datenbank
- 33: Datensammler

- 40: Datenquelle

- S1-S11: Verfahrensschritt

## Patentansprüche

1. Verfahren zur automatischen Prüfung von Küchenplanungsdaten (14) auf mögliche Konflikte, wobei die Küchenplanungsdaten (14) Komponenten einer Küche betreffen, **dadurch gekennzeichnet, dass**
- mindestens eine Prüfregel auf mindestens eine der Komponenten angewendet wird; und
- eine Warn- oder Fehlermeldung ausgegeben wird, wenn die Komponente die Prüfregel nicht erfüllt;
wobei zur Überprüfung mithilfe der Prüfregel Informationen zu der Komponente semantisch ausgewertet werden.

2. Verfahren nach Anspruch 1, bei dem zu der zu überprüfenden Komponente eine Kategorie ermittelt wird, der die Komponente zugeordnet ist, und bei dem die mindestens eine Prüfregel aus einer Datenbank (32) anhand der ermittelten Kategorie abgerufen wird.

3. Verfahren nach Anspruch 2, bei dem zur Ermittlung der Kategorie Informationen zu der Komponente semantisch ausgewertet werden.

4. Verfahren nach einem der Ansprüche 1 bis 3, bei dem die semantische Auswertung einen Textvergleich umfasst.

5. Verfahren nach Anspruch 4, bei dem der Textvergleich mithilfe eines Trunkationsoperators und/oder eines regulären Ausdrucks erfolgt.

6. Verfahren nach einem der Ansprüche 1 bis 5, bei dem Informationen zu der Komponente in der Datenbank (32) gespeichert sind.

7. Verfahren nach Anspruch 6, bei dem zur Ermittlung der Kategorie und/oder zur Überprüfung mithilfe der Prüfregel eine Datenbankabfrage durchgeführt wird.

8. Verfahren nach Anspruch 7, bei dem die Prüfregel in Form einer Datenbankabfrage in der Datenbank (32) gespeichert ist.

9. Verfahren nach einem der Ansprüche 1 bis 8, durchgeführt in einer Prüfungseinrichtung (31), die über ein Netzwerk mit einem Planungsprogramm (11) verbunden ist, das die Küchenplanungsdaten (14) an die Prüfungseinrichtung (31) sendet.
